# EUROPÄISCHE PATENTSCHRIFT

(11) **EP 0 472 953 B1**
(45) Veröffentlichungstag und Bekanntmachung des Hinweises auf die Patenterteilung: **28.09.1994**
(21) Anmeldenummer: 91113127.4
(22) Anmeldetag: 05.08.1991
(51) Int. Cl.: C04B 28/20

(54) **Verfahren zur Herstellung von Dämm-Material und ein Dämm-Material**
Process for the manufacture of insulating material and insulating material
Procédé pour la fabrication d'un matériau isolant et matériau isolant

(30) Priorität: 14.08.1990 DE 4025694
(43) Veröffentlichungstag der Anmeldung: 04.03.1992
(73) Patentinhaber: Endress, Friedrich, D-91207 Lauf (DE)
(72) Erfinder: Endress, Friedrich, D-91207 Lauf (DE)
(74) Vertreter: Rau, Manfred, Dr. Dipl.-Ing.

(56) Entgegenhaltungen:
- DE-A- 3 605 326
- FR-A- 2 156 142
- US-A- 3 794 505
- CHEMICAL ABSTRACTS, vol. 110, no. 7, April 1989, Columbus, Ohio, US;abstract no. 120222, K. UTAGAKI: 'Lightweight aerated concrete reinforced with pulp fiber' Seite 355 ; & JP-A-63 215 577 (K. UTAGAKI) 8. September 1988
- CHEMICAL ABSTRACTS, vol. 111, no. 22, November 1989, Columbus, Ohio, US; abstract no. 200703, M. KUBO: 'Efflorescence-resistant cement products forbuilding materials' Seite 371; & JP-A-01 113 205 (M. KUBO) 1. Mai 1989
- CHEMICAL ABSTRACTS, vol. 109, no. 22, November 1988, Columbus, Ohio, US; abstract no. 196059N, L. MARTA, ET AL: 'The effect of hydrofuge additives on the properties of cement' Seite 375; & MATER. CONSTR. Bd. 18, Nr. 1, 1988, BUCHAREST, Seiten 35-37; L. MARTA ET AL.: 'The effect of hydrofuge additives on the properties of cement'

## Beschreibung

Die Erfindung betrifft ein Verfahren zur Herstellung von Dämm-Material nach dem Oberbegriff des Anspruches 1. Bei dem Dämm-Material handelt es sich insbesondere um Wärme-Dämm-Material oder Dämm-Material zur Trittschalldämmung.

Übliche Dämm-Materialien, wie z.B. solche aus geschäumtem Kunststoff, wie z.B. geschäumtem Polystyrol, weisen den Nachteil auf, daß sie nicht atmen, d.h. nicht in ausreichendem Maße luftdurchlässig sind. Dies beeinflußt das Raumklima von mit derartigen Materialien isolierten Bauwerken.

Der Erfindung liegt daher die Aufgabe zugrunde, ein Verfahren zur Herstellung eines Dämm-Materials anzugeben, das zu einem zufriedenstellenden luftdurchlässigen Dämm-Material führt. Weiterhin soll ein solches Material selber geschaffen werden.

Diese Aufgabe wird bei einem Verfahren nach dem Oberbegriff des Anspruches 1 durch die Merkmale im Kennzeichnungsteil des Anspruches 1 gelöst. Das erfindungsgemäße Verfahren erlaubt es, aus Altpapier hergestellte Papierfasern einzusetzen, die in der erfindungsgemäß angegebenen Weise zu einem Dämm-Material verarbeitet werden, das über eine niedrige Dichte und niedrige Wärmeleitfähigkeit verfügt. Außerdem ist es ausreichend druckfest, um in einem Fußbodenaufbau zur Trittschalldämmung eingesetzt zu werden. Es ist auch sehr gut als Putzträger einsetzbar.

Durch Zusatz eines Hydrophobierungsmittels wird das Dämm-Material feuchtigkeitsbeständig und damit witterungsfest.

Die weiteren Ansprüche geben Einzelheiten der Erfindung wieder.

### Beispiel:

Aus Altpapier ist in üblicher Weise Papierwolle, die also aus leicht verfilzten Papierfasern besteht, hergestellt worden. 1,4 kg dieser Papierfasern werden mit 4,5 l Wasser eingeweicht, wobei dem Wasser vor seiner Zugabe Zinkstearat als Hydrophobierungsmittel zugesetzt worden ist. Anschließend werden diesen eingeweichten Papierfasern 1 kg Kalk (CaOH₂) und 0,65 kg Quarzmehl (SiO₂) trocken zugesetzt und miteinander vermischt. Im Anschluß daran wird diese Masse im Autoklaven bei 210 bis 220°C im Sättigungszustand des Wasserdampfs, d.h. bei einem Druck von etwa 19 bis 23 bar behandelt. Es entsteht hierbei ein fester Körper mit einer Dichte von etwa 400 kg/m³, der anschließend noch einer Nachtrocknung unterworfen wird. Das Dämm-Material weist gute Wärmedämmeigenschaften auf. Es ist offenporig und zwar mit sehr feinen Poren. Das Material ist klebbar. Es kann also gut als Wärme-Dämm-Material oder zur Trittschalldämmung verlegt werden. Es können weiterhin geeignete Flammschutzmittel, wie z.B. Borsäure, Borax oder tetraphosphorsaures Natrium eingesetzt werden, und zwar beispielsweise 10 Gew.% bezogen auf die Papierwolle.

Im Autoklaven erfolgt lediglich eine Härtung; das verbleibende nicht gebundene Wasser wird bei der Nachtrocknung, beispielsweise in einem Wärmeschrank, durch Verdampfung entfernt. Hierbei entsteht überwiegend auch die Feinporigkeit. Dies ist darauf zurückzuführen, daß sehr viel Wasser in mikrofeiner Verteilung an der Oberfläche der Papierfasern haftet, daß nach dem Verdampfen entsprechend feine Poren in dem Dämm-Material zurückläßt, die zu den guten Isolier- bzw. Dämm-Eigenschaften führen. Hieraus ergibt sich auch, daß die einzusetzende Wassermenge in Grenzen variabel ist; es muß mindestens die für die Kalziumsilikatbildung notwendige Wassermenge zugesetzt werden.

Auch die Menge bzw. der Anteil an Papierfasern ist variabel; die Menge beeinflußt einerseits die Dämm-Eigenschaften und andererseits die Festigkeit des Dämm-Materials, das bevorzugt in Plattenform hergestellt werden kann.

## Patentansprüche

1. Verfahren zur Herstellung von Dämm-Material, dadurch gekennzeichnet, daß zerfasertes Papier mit Wasser, Kalk und Quarzmehl versetzt und anschließend einer Wärmebehandlung über 200°C in einem Autoklaven ausgesetzt wird.

2. Verfahren nach Anspruch 1, dadurch gekennzeichnet, daß das zerfaserte Papier in Wasser eingeweicht wird und daß anschließend Kalk und Quarzmehl trocken zugesetzt werden.

3. Verfahren nach Anspruch 1 oder 2, dadurch gekennzeichnet, daß ein Hydrophobierungsmittel zugesetzt wird.

4. Verfahren nach Anspruch 2 und 3, dadurch gekennzeichnet, daß das Hydrophobierungsmittel beim Einweichen zugesetzt wird.

5. Verfahren nach einem der Ansprüche 1 bis 4, dadurch gekennzeichnet, daß Zinkstearat als Hydrophobierungsmittel eingesetzt wird.

6. Verfahren nach einem der Ansprüche 1 bis 5, dadurch gekennzeichnet, daß ein Flammschutzmittel zugesetzt wird.

7. Verfahren nach einem der Ansprüche 1 bis 6, dadurch gekennzeichnet, daß die Wärmebehandlung bei 210 bis 220°C bei Wasserdampf-Sättigungs-Druck durchgeführt wird.

8. Verfahren nach einem der Ansprüche 1 bis 7, dadurch gekennzeichnet, daß im Anschluß an die Wärmebehandlung eine Trocknung vorgenommen wird.

9. Verfahren nach einem der Ansprüche 1 bis 8, dadurch gekennzeichnet, daß 1,4 Gewichtsteile zerfasertes Papier, 4,5 Gewichtsteile Wasser, 1,0 Gewichtsteile Kalk und 0,65 Gewichtsteile Quarzmehl eingesetzt werden.

10. Dämm-Material erhalten durch ein Verfahren gemäß einem der vorangehenden Ansprüche.

## Claims

1. Method for the manufacture of insulating material, characterized in that defibrated paper is mixed with water, lime and quartz powder and then subjected to a heat treatment of more than 200°C in an autoclave.

2. Method according to claim 1, characterized in that the defibrated paper is soaked in water and that subsequently lime and quartz powder are added dry.

3. Method according to claim 1 or 2, characterized in that a waterproofing agent is added.

4. Method according to claims 2 and 3, characterized in that a waterproofing agent is added during the soaking.

5. Method according to one of the claims 1 to 4, characterized in that zinc stearate is used as a waterproofing agent.

6. Method according to one of the claims 1 to 5, characterized in that a flame-proofing agent is added.

7. Method according to one of the claims 1 to 6, characterized in that the heat treatment takes place at 210 to 220°C at saturated water vapor pressure.

8. Method according to one of the claims 1 to 7, characterized in that desiccation is performed subsequent to the heat treatment.

9. Method according to one of the claims 1 to 8, characterized in that 1.4 parts by weight of paper, 4.5 parts by weight of water, 1.0 parts by weight of lime and 0.65 parts by weight of quartz powder are added.

10. Insulating material obtained by a method according to one of the preceding claims.

## Revendications

1. Procédé pour la fabrication de matériau isolant, caractérisé en ce que du papier défibré est mélangé avec de l'eau, de la chaux et de la poudre de quartz, et subit ensuite un traitement thermique dans un autoclave à une température supérieure à 200 °C.

2. Procédé selon la revendication 1, caractérisé en ce que le papier défibré est ramolli dans de l'eau, et en ce que de la chaux et de la poudre de quarts y sont ensuite ajoutées à l'état sec.

3. Procédé selon la revendication 1 ou 2, caractérisé en ce qu'un agent d'hydrofugation est ajouté.

4. Procédé selon la revendication 2 ou 3, caractérisé en ce que l'agent d'hydrofugation est ajouté lors du ramollissement.

5. Procédé selon l'une des revendications 1 à 4, caractérisé en ce que du stéarate de zinc est utilisé comme agent d'hydrofugation.

6. Procédé selon l'une des revendications 1 à 5, caractérisé en ce qu'un agent ignifuge est ajouté.

7. Procédé selon une des revendications 1 à 6, caractérisé en ce que le traitement thermique est effectué entre 210 et 220 °C sous une pression de saturation de vapeur d'eau.

8. Procédé selon l'une des revendications 1 à 7, caractérisé en ce qu'un séchage est effectué à la suite du traitement thermique.

9. Procédé selon l'une des revendications 1 à 8, caractérisé en ce que le papier est mis en oeuvre à raison de 1,4 parties en poids, l'eau à raison de 4,5 parties en poids, la chaux à raison de 1,0 parties en poids et la poudre de quartz à raison de 0,65 parties en poids.

10. Matériau isolant obtenu par un procédé conforme à l'une des revendications précédentes.
